# EUROPEAN PATENT APPLICATION

(11) **EP 2 824 327 A1**
(43) Date of publication of application: **14.01.2015**
(21) Application number: 14175771.6
(22) Date of filing: 04.07.2014
(51) Int. Cl.: F03D 11/00, B21D 1/08, F03D 1/00

(54) **System and method for removing dents from a wind turbine**

(30) Priority: 09.07.2013 US 201313937323
(71) Applicant: General Electric Company, Schenectady, New York 12345 (US)
(72) Inventor: Arumugam, Ilayarajan, 560066 Bangalore (IN); Sivanantham, Mohan Muthu Kumar, 560066 Bangalore (IN)
(74) Representative: Illingworth-Law, William Illingworth

(57) **Abstract**

A system 100 and method for removing a dent 110 from a wind turbine tower 112 is provided. The system 100 includes a measuring system 120 configured for measuring a shape of the dent 110 in at least two dimensions. A ram assembly 140 is configured to be placed against the dent 110 and an inside portion of the wind turbine tower 112. A control system 130 is connected to both the ram assembly 140 and the measuring system 120, and the control system 130 is configured for controlling operation of the ram assembly 140 based on data received from the measuring system 120. The measuring system 120 monitors the shape of the dent 110 during activation of the ram assembly 140.

## Description

The system and method described herein relates generally to wind turbine towers. More specifically, the system and method relates to the removal of dents from a wind turbine tower.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

During operation of a wind turbine, the wind turbine is subjected to thrust due to the interaction of wind with the rotor blades of the wind turbine, and this thrust load is transferred to the tower. Loads on the tower are also imposed by the weight of the rotor, nacelle, generator and gearbox. The uptower components may weigh 50 to 100 tons or more. The tower must support the weight of these components, but also the additional thrust loads imposed by the wind. Accordingly, any undesired imperfections in the tower that could affect its load carrying capacity should be minimized or eliminated.

Wind turbine towers must be transported to the installation site and handled during tower assembly. Unfortunately, during transportation or handling dents can be formed in the tower. The size and location of the dent determines if it negatively affects the load carrying capacity of the tower. A very small, shallow dent, may have no appreciable effect on the tower. However, a larger and deeper dent will have to be repaired before the tower can be used. Dents greater than a predetermined size and/or depth can negatively affect the buckling strength of the tower. Accordingly, dents may have to be removed from a wind turbine tower before use, or the tower section will need to be replaced.

In an aspect of the present invention, a system for removing a dent from a wind turbine tower is provided. The system includes a measuring system configured for measuring a shape of the dent in at least two dimensions. A ram assembly is configured to be placed against the dent and an inside portion of the wind turbine tower. A control system is connected to both the ram assembly and the measuring system, and the control system is configured for controlling operation of the ram assembly based on data received from the measuring system. The measuring system monitors the shape of the dent during activation of the ram assembly.

In another aspect of the present invention, a system for removing a dent includes a measuring system configured for measuring a shape of the dent in at least two dimensions. The measuring system includes a two dimensional array of sensors. A ram assembly is configured to be placed against the dent and an inside portion of a structure. A control system is connected to both the ram assembly and the measuring system. The control system is configured for controlling operation of the ram assembly based on data received from the measuring system. The measuring system monitors the shape of the dent during activation of the ram assembly.

In yet another aspect of the present invention, a method for removing a dent from a wind turbine tower includes the steps of, measuring a shape of the dent in at least two dimensions, formulating a plan for removing the dent based on results of the measuring step, placing a ram assembly inside the wind turbine tower and in contact with the dent, activating the ram assembly while simultaneously measuring the shape of the dent, and controlling activation of the ram assembly based on the shape of the dent.
FIG. 1 illustrates a simplified plan view of a system for removing a dent from a wind turbine tower, according to an aspect of the present invention;
FIG. 2 illustrates a simplified plan view of a system for removing a dent from a wind turbine tower, according to an aspect of the present invention;
FIG. 3 illustrates a simplified plan view of a system for removing a dent from a wind turbine tower, according to an aspect of the present invention;
FIG. 4 illustrates a plan view of a proximity sensor used in the measuring system, according to an aspect of the present invention;
FIG. 5 illustrates a plan view of a proximity sensor used in the measuring system, according to an aspect of the present invention;
FIG. 6 illustrates a schematic view of the control system, according to an aspect of the present invention;
FIG. 7 illustrates a simplified plan view of a system for removing a dent from a wind turbine tower, according to an aspect of the present invention; and
FIG. 8 illustrates a plan view of a ram assembly that includes an array of rams, according to an aspect of the present invention.

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

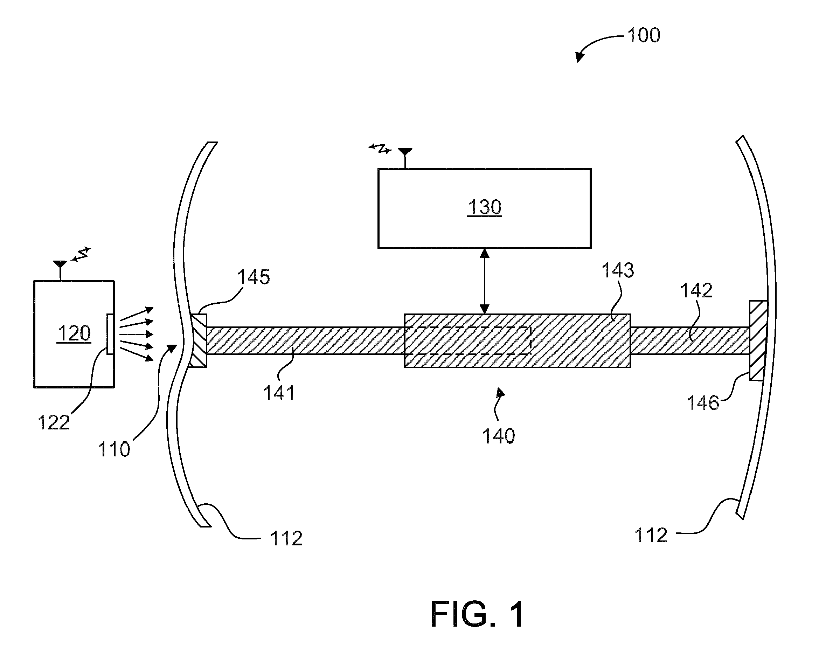

FIG. 1 illustrates a simplified plan view of the system 100 for removing a dent 110 from a wind turbine tower 112. The system 100 includes a measuring system 120 configured to measure the shape of the dent 110 in at least two dimensions. An imaging sensor 122 or non-contact type sensor may be used to image and/or measure the size and depth of the dent. The dent may also be measured in three dimensions to obtain a three-dimensional model or profile of the dent 110. The measuring system 120 is placed outside the tower 112, as most dents 110 project radially inward with respect to the tower. However, the measuring system 120 could also be placed inside the tower and a "negative" or "positive" image or scan of the dent 110 may be obtained. The measuring system 120 could also be attached to ram assembly 140. The tower 112 could also be any structure that needs dent removal.

The measuring system 120 communicates with a control system 130 via a wired or wireless link. The control system 130 formulates a plan for removing the dent based on the results of the scan (or measuring) from the measuring system 120. As shown, the control system 130 is connected to both the measuring system 120 and a ram assembly 140, and the control system 130 controls operation of the ram assembly 140 based on data received from the measuring system.

The ram assembly 140 includes pipe sections 141 and 142 and an actuating cylinder 143. The ram assembly is sized to fit within the wind turbine tower and pipe section 142 (and/or pipe section 141) may be exchanged for pipes of different lengths to accommodate wind turbine towers of various diameters. The end of pipe section 141 includes a pad 145 that may be sized and shaped to conform to the desired inner profile of tower 112. Likewise, the end of pipe section 142 also includes a pad 146 that is sized and shaped to conform to the inner profile of tower 112, to distribute the forces during a pushing operation. The ram assembly 140 may be hydraulically powered, pneumatically powered, electrically powered, magnetically powered or a mixture thereof.

In operation, the measuring system 120 measures a shape of the dent 110 in at least two dimensions. In some applications it may be desired to measure the dent in three dimensions. The results of the measuring step are then sent to the control system 130, and the control system 130 formulates a plan for removing the dent 110 based on the received data. The plan may include where to place the pad 145, or how far to push pipe 141. The ram assembly 140 is placed inside tower 112 and pad 145 is placed in contact with dent 110 and pad 146 is placed in contact with an opposing portion of the tower 112. The ram assembly 140 is then activated by control system 130 while the measuring system simultaneously measures and monitors the shape of the dent 110. As the dent 110 becomes smaller, the shape changes and this change is detected by measuring system 120. This data is communicated back to control system 130 so that the control system 130 prevents ram assembly 140 from over-pushing dent 110.

In the past, dents 110 can respond variably to pushing from ram assembly 140. Some dents will respond very slowly and other dents will respond very quickly. Slowly responding dents are not a problem, as pushing too little can be remedied by further activation of the ram assembly. However, a dent that suddenly changes from concave (radially inwardly projecting) to convex (radially outwardly projecting) is a problem, in that convex dents can be more complex to repair. Accordingly, it would be advantageous to avoid the creation of convex dents during the process of removing concave dents. The constant monitoring of measuring system 120 during a pushing operation reduces the likelihood of creating a convex dent. For example, as dent 110 is "pushed out" feedback from measuring system 120 to control system 130 enables control system to reduce the pushing force or travel of ram assembly 140. When the dent 110 reaches a predetermined shape, the ram assembly can be turned off by control system 130.

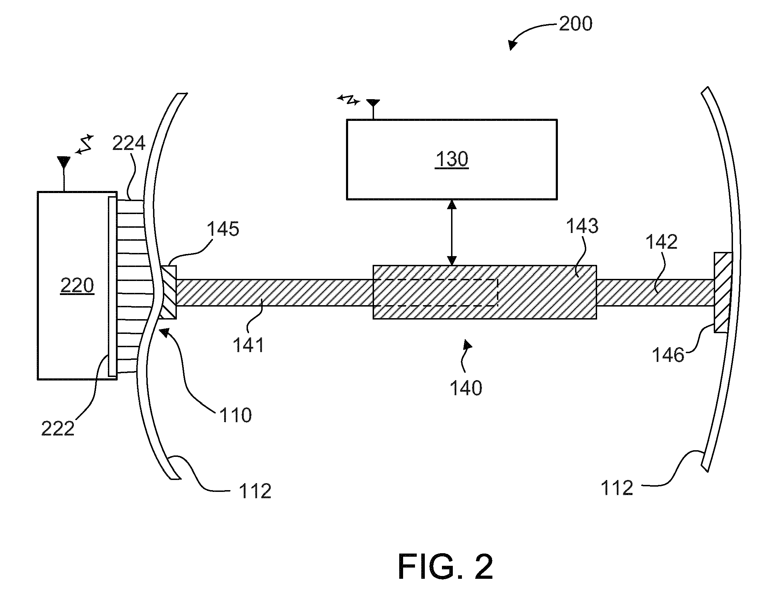

FIG. 2 illustrates a simplified plan view of the system 200 for removing a dent 110 from a wind turbine tower 112. The system 200 includes a measuring system 220 configured to measure the shape of the dent 110 in at least two dimensions. A contact sensor 222 is used to measure and map the size and depth of the dent 110. The contact probes 224 may be arranged in a two dimensional array and provide a three dimensional map of the dent 110. The contact probes 224 respond in real time during a pushing operation so that the change in shape of dent 110 is constantly monitored during a pushing operation.

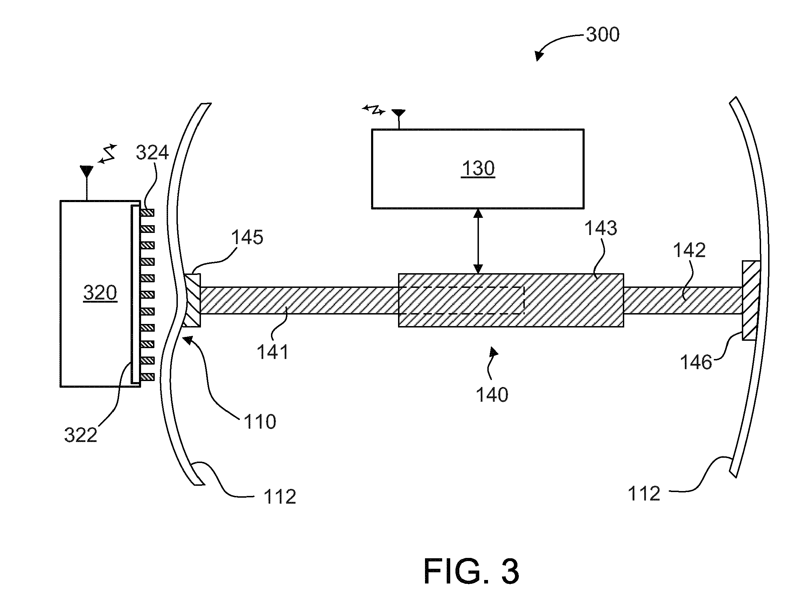

FIG. 3 illustrates a simplified plan view of the system 300 for removing a dent 110 from a wind turbine tower 112. The system 300 includes a measuring system 320 configured to measure the shape of the dent 110 in at least two dimensions. A proximity sensor 322 is used to measure and map the size and depth of the dent 110. The proximity sensors 324 may be arranged in a two dimensional array and provide a three dimensional map of the dent 110. The proximity sensors 324 respond in real time during a pushing operation so that the change in shape of dent 110 is constantly monitored during a pushing operation. Proximity sensors 324 may be capacitive, electromagnetic, inductive or any other suitable type of proximity sensor.

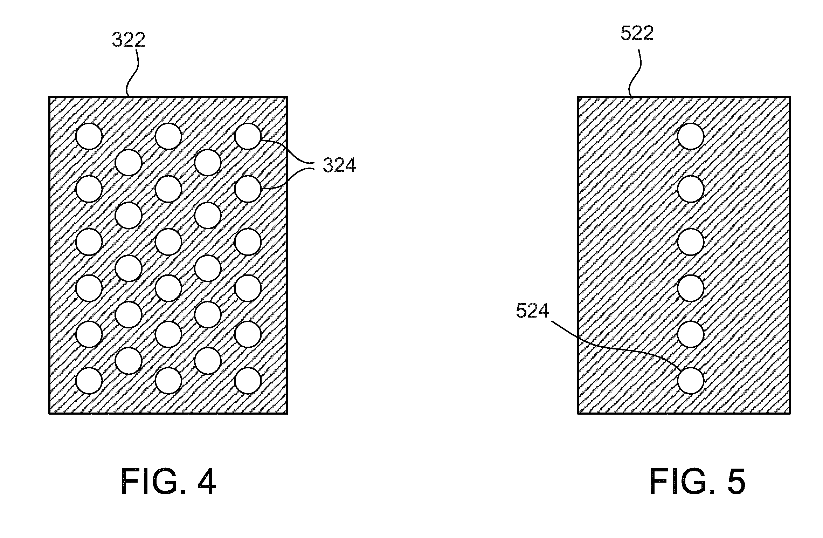

FIG. 4 illustrates a plan view of the proximity sensor 322 of measuring system 320. The individual proximity sensors 324 are configured in a two dimensional array, and provide a three dimensional view or map of the dent 110. This two dimensional sensor configuration could also be applied to imaging sensors, contact sensors or any other desired sensor type. The advantage of a two dimensional sensor array is that the whole dent may be measured and monitored, as well as providing a real time three dimensional view or map of the dent. FIG. 5 illustrates a one dimensional sensor array used in sensor 522 where the individual sensor elements 524 are arranged in a linear (or one dimensional) configuration.

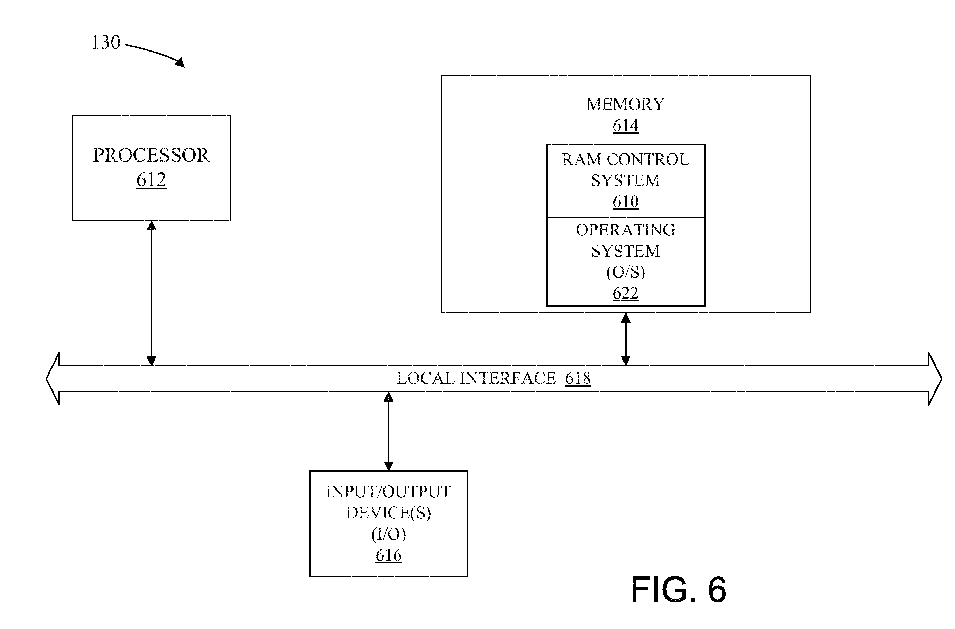

FIG. 6 illustrates a schematic view of control system 130. The control system 130 can be implemented in software (e.g., firmware), hardware, or a combination thereof. In the currently contemplated best mode, the control system 130 is implemented in software, as an executable program, and is executed by a special or general purpose digital computer, such as a personal computer (PC; IBM-compatible, Applecompatible, or otherwise), workstation, minicomputer, or mainframe computer. An example of a general purpose computer that can implement the control system 130 of the present invention is shown in FIG. 6.

Generally, in terms of hardware architecture, as shown in FIG. 6, the control system 130 includes a processor 612, memory 614, and one or more input and/or output (I/O) devices 616 (or peripherals) that are communicatively coupled via a local interface 618. The local interface 618 can be, for example but not limited to, one or more buses or other wired or wireless connections, as is known in the art. The local interface 618 may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor 612 is a hardware device for executing software, particularly that stored in memory 614. The processor 612 can be any custom made or commercially available processor, a central processing unit (CPU), an auxiliary processor among several processors associated with the control system 130, a semiconductor based microprocessor (in the form of a microchip or chip set), a macroprocessor, or generally any device for executing software instructions. Examples of suitable commercially available microprocessors are as follows: a PA-RISC series microprocessor from Hewlett-Packard Company, an 80x86 or Pentium series microprocessor from Intel Corporation, a PowerPC microprocessor from IBM, a Sparc microprocessor from Sun Microsystems, Inc, or a 68xxx series microprocessor from Motorola Corporation.

The memory 614 can include any one or combination of volatile memory elements (e.g., random access memory (RAM, such as DRAM, SRAM, SDRAM, etc.)) and nonvolatile memory elements (e.g., ROM, hard drive, tape, CDROM, etc.). Moreover, the memory 614 may incorporate electronic, magnetic, optical, and/or other types of storage media. Note that the memory 614 can have a distributed architecture, where various components are situated remote from one another, but can be accessed by the processor 612.

The software in memory 614 may include one or more separate programs, each of which comprises an ordered listing of executable instructions for implementing logical functions. In the example of FIG. 6, the software in the memory 614 includes the Ram control system 610 in accordance with the present invention and a suitable operating system (O/S) 622. A nonexhaustive list of examples of suitable commercially available operating systems 22 is as follows: (a) a Windows operating system available from Microsoft Corporation; (b) a Netware operating system available from Novell, Inc.; (c) a Macintosh operating system available from Apple Computer, Inc.; (e) a UNIX operating system, which is available for purchase from many vendors, such as the Hewlett-Packard Company, Sun Microsystems, Inc., and AT&T Corporation; (d) a LINUX operating system, which is freeware that is readily available on the Internet; (e) a run time Vxworks operating system from WindRiver Systems, Inc.; or (f) an appliance-based operating system, such as that implemented in handheld computers or personal data assistants (PDAs) (e.g., PalmOS available from Palm Computing, Inc., and Windows CE available from Microsoft Corporation). The operating system 622 essentially controls the execution of other computer programs, such as the Ram control system 610, and provides scheduling, input-output control, file and data management, memory management, and communication control and related services.

The Ram control system 610 is a source program, executable program (object code), script, or any other entity comprising a set of instructions to be performed. When a source program, then the program needs to be translated via a compiler, assembler, interpreter, or the like, which may or may not be included within the memory 614, so as to operate properly in connection with the O/S 622. Furthermore, the Ram control system 610 can be written as (a) an object oriented programming language, which has classes of data and methods, or (b) a procedure programming language, which has routines, subroutines, and/or functions, for example but not limited to, C, C+ +, Pascal, Basic, Fortran, Cobol, Perl, Java, and Ada. In the currently contemplated best mode of practicing the invention, the Ram control system 610 controls operation of the ram assembly 140 in conjunction with data received from the measuring system 120, 220, 320.

The I/O devices 616 may include input devices, for example but not limited to, a keyboard, mouse, scanner, microphone, projector, etc. Furthermore, the I/O devices 616 may also include output devices, for example but not limited to, a printer, display, etc. Finally, the I/O devices 616 may further include devices that communicate both inputs and outputs, for instance but not limited to, a modulator/demodulator (modem; for accessing another device, system, or network), a radio frequency (RF) or other transceiver, a telephonic interface, a bridge, a router, an image projector, a laser, etc.

If the control system 130 is a PC, workstation, or the like, the software in the memory 614 may further include a basic input output system (BIOS) (omitted for simplicity). The BIOS is a set of essential software routines that initialize and test hardware at startup, start the O/S 622, and support the transfer of data among the hardware devices. The BIOS is stored in ROM so that the BIOS can be executed when the control system 130 is activated.

When the control system 130 is in operation, the processor 612 is configured to execute software stored within the memory 614, to communicate data to and from the memory 614, and to generally control operations of the control system 130 pursuant to the software. The Ram control system 610 and the O/S 622, in whole or in part, but typically the latter, are read by the processor 612, perhaps buffered within the processor 612, and then executed.

When the ram control system 610 is implemented in software, as is shown in FIG. 6, it should be noted that the ram control system 610 can be stored on any computer readable medium for use by or in connection with any computer related system or method. In the context of this document, a computer readable medium is an electronic, magnetic, optical, or other physical device or means that can contain or store a computer program for use by or in connection with a computer related system or method. The ram control system 610 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

In an alternative embodiment, where the ram control system 610 is implemented in hardware, the ram control system 610 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

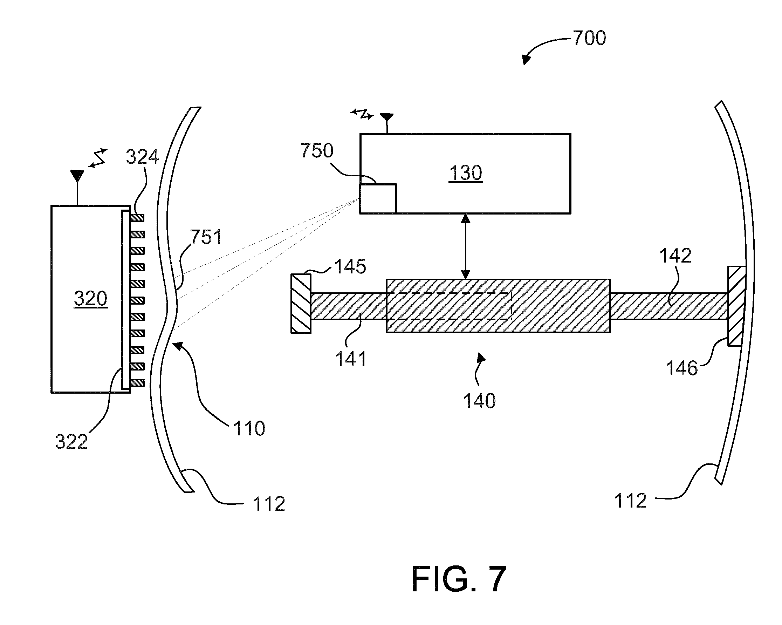

FIG. 7 illustrates a simplified plan view of a system 700 for removing a dent 110 from a wind turbine tower 112. The control system 130 may also include a projector 750 for projecting a visual indication or guide 751 on dent 110 (or the interior of tower 112). The guide 751 may be a spot, a grid or any other visual indicator that enables precise placement of the pad 145 on a specific portion of dent 110. For example, projector 750 may comprise a laser that projects a spot on the dent 110, and this spot can be marked with a marker or pencil. The ram assembly 140 can then be oriented so that pad 145 is placed over the indicated point 751. Precise placement of pad 145 may be desired in many applications. If multiple pushing operations are needed, then control system 130 may formulate a plan where the pad 145 is placed in multiple places in dent 110. The projector can indicate each of the positions to facilitate the pushing operation, and ensure proper positioning and alignment of the ram assembly 140. The projector 750 or control system 130 may also include a measuring system or imaging device, to facilitate location of dent 110.

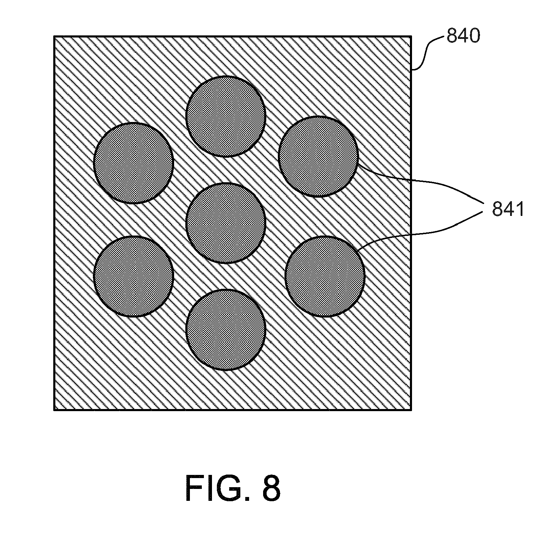

FIG. 8 illustrates a plan view of a ram assembly 840 that includes an array of rams 841. Each of the individual rams 841 may be hydraulically, electrically, magnetically or pneumatically powered. The array of rams 841 is configured in a two-dimensional pattern and may be used to provide greater control over how and where force is applied on dent 110. If a dent 110 responds asymmetrically or unexpectedly during a pushing operation, the constant monitoring by the measuring system can be used by the control system to adjust the pushing force on specific rams 841. By individually controlling the pushing force (or amount of travel) on each ram 841 the control system 130 can closely control how and where dent 110 is pushed out.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system for removing a dent from a wind turbine tower, the system comprising:
   a measuring system configured for measuring a shape of the dent in at least two dimensions;
   a ram assembly configured to be placed against the dent and an inside portion of the wind turbine tower;
   a control system connected to both the ram assembly and the measuring system, the control system configured for controlling operation of the ram assembly based on data received from the measuring system; and
   wherein, the measuring system monitors the shape of the dent during activation of the ram assembly.
2. The system of clause 1, wherein the measuring system further comprises at least one of:
   proximity sensors, contact sensors, or imaging sensors.
3. The system of any preceding clause, wherein the measuring system includes a two dimensional array of sensors.
4. The system of any preceding clause, wherein the measuring system is configured for measuring the shape of the dent in three dimensions.
5. The system of any preceding clause, wherein the ram assembly further comprises:
   a single ram that is at least one of hydraulically, electrically or pneumatically powered.
6. The system of any preceding clause, wherein the ram assembly further comprises:
   an array of rams, where each individual ram is at least one of hydraulically, electrically or pneumatically powered; and
   wherein the array of rams is configured in a two-dimensional pattern.
7. The system of any preceding clause, the control system further comprising:
   a projector configured for projecting a visual indication on the dent to facilitate placement of the ram assembly on the dent.
8. A system for removing a dent, the system comprising:
   a measuring system configured for measuring a shape of the dent in at least two dimensions, wherein the measuring system includes a two dimensional array of sensors;
   a ram assembly configured to be placed against the dent and an inside portion of a structure;
   a control system connected to both the ram assembly and the measuring system, the control system configured for controlling operation of the ram assembly based on data received from the measuring system; and
   wherein, the measuring system monitors the shape of the dent during activation of the ram assembly.
9. The system of any preceding clause, wherein the measuring system further comprises at least one of:
   proximity sensors, contact sensors, or imaging sensors.
10. The system of any preceding clause, wherein the ram assembly further comprises:
   a single ram that is at least one of hydraulically, electrically or pneumatically powered.
11. The system of any preceding clause, wherein the ram assembly further comprises:
   an array of rams, where each individual ram is at least one of hydraulically, electrically or pneumatically powered; and
   wherein the array of rams is configured in a two-dimensional pattern.
12. The system of any preceding clause, the control system further comprising:
   a projector configured for projecting a visual indication on the dent to facilitate placement of the ram assembly on the dent.
13. The system of any preceding clause, wherein the measuring system is configured for measuring the shape of the dent in three dimensions.
14. A method for removing a dent from a wind turbine tower, the method comprising the steps of:
   measuring a shape of the dent in at least two dimensions;
   formulating a plan for removing the dent based on results of the measuring step;
   placing a ram assembly inside the wind turbine tower and in contact with the dent;
   activating the ram assembly while simultaneously measuring the shape of the dent; and
   controlling activation of the ram assembly based on the shape of the dent.
15. The method of any preceding clause, wherein the measuring step measures the shape of the dent in three dimensions.
16. The method of any preceding clause, wherein the measuring step is performed by at least one of:
   proximity sensors, contact sensors, or imaging sensors.
17. The method of any preceding clause, wherein the measuring step is performed by a two dimensional array of sensors.
18. The method of any preceding clause, wherein the ram assembly further comprises:
   a single ram that is at least one of hydraulically, electrically or pneumatically powered.
19. The method of any preceding clause, wherein the ram assembly further comprises:
   an array of rams, where each individual ram is at least one of hydraulically, electrically or pneumatically powered; and wherein the array of rams is configured in a two-dimensional pattern.
20. The method of any preceding clause, wherein the placing step further comprises:
   projecting a visual indication on the dent to facilitate placement of the ram assembly.

## Claims

1. A system (100) for removing a dent (110), the system (100) comprising:
a measuring system (120) configured for measuring a shape of the dent (110) in at least two dimensions;
a ram assembly (140) configured to be placed against the dent (110) and an inside portion of a structure (112);
a control system (130) connected to both the ram assembly (140) and the measuring system (120), the control system (130) configured for controlling operation of the ram assembly (140) based on data received from the measuring system (120); and
wherein, the measuring system (120) monitors the shape of the dent (110) during activation of the ram assembly (140).

2. The system of claim 1, wherein the measuring system (120) further comprises at least one of:
proximity sensors (322), contact sensors, or imaging sensors.

3. The system of claim 1 or claim 2, wherein the measuring system (120) includes a two dimensional array of sensors.

4. The system of claim 1, 2 or 3, wherein the measuring system (120) is configured for measuring the shape of the dent (110) in three dimensions.

5. The system of any preceding claim, wherein the ram assembly (140) further comprises:
a single ram that is at least one of hydraulically, electrically or pneumatically powered.

6. The system of any preceding claim, wherein the ram assembly (140) further comprises:
an array of rams, where each individual ram is at least one of hydraulically, electrically or pneumatically powered; and
wherein the array of rams is configured in a two-dimensional pattern.

7. The system of any preceding claim, the control system (130) further comprising:
a projector configured for projecting a visual indication on the dent (110) to facilitate placement of the ram assembly (140) on the dent (110).

8. A system (100) for removing a dent (110) from a wind turbine (112) tower comprising the system of any preceding claim, wherein:
the measuring system (120) is configured for measuring a shape of the dent (110) in at least two dimensions;
the ram assembly (140) is configured to be placed against the dent (110) and an inside portion of the wind turbine tower (112);
the control system (130) is connected to both the ram assembly (140) and the measuring system (120), the control system (130) configured for controlling operation of the ram assembly (140) based on data received from the measuring system (120); and
wherein, the measuring system (120) monitors the shape of the dent (110) during activation of the ram assembly (140).

9. A method for removing a dent (110) from a wind turbine tower (112), the method comprising the steps of:
measuring a shape of the dent (110) in at least two dimensions;
formulating a plan for removing the dent (110) based on results of the measuring step;
placing a ram assembly (140) inside the wind turbine tower (112) and in contact with the dent (110);
activating the ram assembly (140) while simultaneously measuring the shape of the dent (110); and
controlling activation of the ram assembly (140) based on the shape of the dent (110).

10. The method of claim 9, wherein the measuring step measures the shape of the dent in three dimensions.

11. The method of claim 9 or claim 10, wherein the measuring step is performed by at least one of:
proximity sensors, contact sensors, or imaging sensors.

12. The method of claim 9, 10 or 11, wherein the measuring step is performed by a two dimensional array of sensors.

13. The method of any one of claims 9 to 12, wherein the ram assembly (140) further comprises:
a single ram that is at least one of hydraulically, electrically or pneumatically powered.

14. The method of any one of claims 9 to 13, wherein the ram assembly (140) further comprises:
an array of rams, where each individual ram is at least one of hydraulically, electrically or pneumatically powered; and wherein the array of rams is configured in a two-dimensional pattern.

15. The method of any one of claims 9 to 14, wherein the placing step further comprises:
projecting a visual indication on the dent (110) to facilitate placement of the ram assembly (140).
